(19) Europäisches Patentamt
European Patent Office
Office européen des brevets

(11) Veröffentlichungsnummer: **0 445 075 B1**

# (12) EUROPÄISCHE PATENTSCHRIFT

(45) Veröffentlichungstag der Patentschrift: **21.09.94**

(51) Int. Cl.$^5$: **C09B 69/02**, C08K 5/08

(21) Anmeldenummer: **91810112.2**

(22) Anmeldetag: **20.02.91**

Die Akte enthält technische Angaben, die nach dem Eingang der Anmeldung eingereicht wurden und die nicht in dieser Patentschrift enthalten sind.

## (54) Neue Farbsalze der Anthrachinonfarbstoffreihe.

(30) Priorität: **27.02.90 CH 629/90**

(43) Veröffentlichungstag der Anmeldung:
**04.09.91 Patentblatt 91/36**

(45) Bekanntmachung des Hinweises auf die Patenterteilung:
**21.09.94 Patentblatt 94/38**

(84) Benannte Vertragsstaaten:
**DE FR GB IT**

(56) Entgegenhaltungen:
**CH-A- 566 382**
**US-A- 4 005 066**
**US-A- 4 359 418**

(73) Patentinhaber: **CIBA-GEIGY AG**
**Klybeckstrasse 141**
**CH-4002 Basel (CH)**

(72) Erfinder: **Tanner, Martin, Dr.**
**Uf em Bärg**
**CH-1734 Tentlingen (CH)**
Erfinder: **Mäusezahl, Dieter, Dr.**
**Langgartenstrasse 19**
**CH-4105 Biel-Benken (CH)**
Erfinder: **Lienhard, Paul, Dr.**
**Kirschgartenstrasse 14**
**CH-4402 Frenkendorf (CH)**
Erfinder: **von Arx, Robert**
**Gartenstrasse 49**
**CH-4132 Muttenz (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Anmeldung betrifft neue Farbsalze von sulfogruppenhaltigen Anthrachinonfarbstoffen und ihre Verwendung zum Farben von organischen Lösungen von Polymeren.

Aus der US-PS 3 994 872 sind unter vielen anderen Farbsalzen auch solche von 1-Amino-4-phenylamino-anthrachinon-2-sulfonsäure, 1-Amino-4-p-toluylamino-anthrachinon-2-sulfonsäure, 1-Amino-4-(3,4-dimethylphenylamino)-antbrachinon-2-sulfonsäure und 1-Amino-4-cyclohexylamino-anthrachinon-2-sulfonsäure bekannt. Diese Farbsalze genügen nicht immer den heutigen Anforderungen der Technik.

Es sind nun neue Farbsalze von sulfogruppenhaltigen Anthrachinonfarbstoffen gefunden worden, die sich durch überraschend gute Eigenschaften, wie z.B. Reinheit, hohe Sättigung, optimale Absorptionsbandenform, gute Haftung, Lager-, Migrations-, Licht- und Wetterbeständigkeit und Löslichkeit in organischen Lösungsmitteln, auszeichnen.

Die vorliegende Erfindung betrifft demnach Farbsalze der Formel

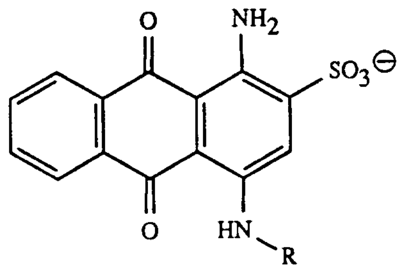

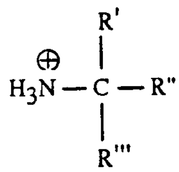

(I),

worin R eine Gruppe der Formeln

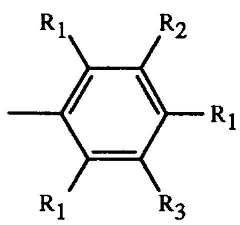

oder

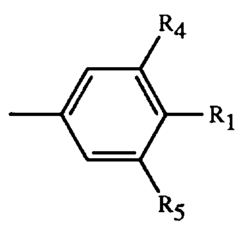

,

bedeutet, worin $R_1$ $C_1$-$C_4$-Alkyl, $R_2$ und $R_3$ unabhängig voneinander Wasserstoff, $CH_2X$, $SO_2Y$ oder NHCOZ bedeuten, $R_4$ Wasserstoff oder $C_1$-$C_4$-Alkyl ist und $R_5$ $CH_2X$, $SO_2Y$ oder NHCOZ bedeutet, X eine Gruppe $NHCOR_6$ oder $NR_7SO_2R_6$, Y $NR_8R_9$ oder $N(R_8)_2$ und Z $C_1$-$C_4$-Alkyl oder $NHR_9$ bedeuten, $R_6$ $C_1$-$C_4$-Alkyl, unsubstituiertes oder durch $C_1$-$C_4$-Alkyl oder Halogen substituiertes Phenyl, $R_7$ Wasserstoff oder $C_1$-$C_4$-Alkyl und $R_8$ Wasserstoff, $C_1$-$C_4$-Alkyl oder eine Gruppe

$$-(CH_2)_2-OH$$

bedeutet, und $R_9$ Wasserstoff, $C_1$-$C_4$-Alkyl oder Phenyl ist, und R', R'' und R''' Alkylreste mit zusammen 10 bis 24 Kohlenstoffatomen bedeuten, sowie Gemische solcher Farbsalze.

Bedeuten etwaige Substituenten $C_1$-$C_4$-Alkyl, so handelt es sich um Methyl, Ethyl, n-Propyl, Isopropyl, n-Butyl, sec.-Butyl oder tert.-Butyl.

Halogen bedeutet z.B. Brom, Jod oder insbesondere Chlor.

Von besonderer Bedeutung sind die Farbsalze der Formel I, worin $R_1$ Methyl oder Ethyl ist und vornehmlich diejenigen, worin $R_1$ Methyl, $R_2$ und $R_3$ unabhängig voneinander Wasserstoff oder $CH_2X$, $R_4$ Methyl und $R_5$ $SO_2Y$ bedeuten, X eine Gruppe $NHCOR_6$ und Y $NHR_8$ sind, wobei $R_6$, $R_7$ und $R_8$ die oben angegebene Bedeutung haben.

Bevorzugt sind die Farbsalze der Formel I, worin R eine Gruppe der Formel

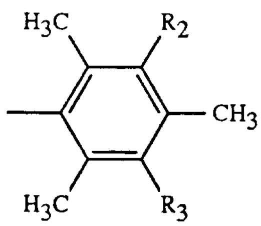

ist, worin $R_2$ und $R_3$ unabhängig voneinander Wasserstoff oder eine Gruppe $CH_2$-$NHCOC_6H_5$ bedeuten, und diejenigen der Formel I, worin R eine Gruppe der Formel

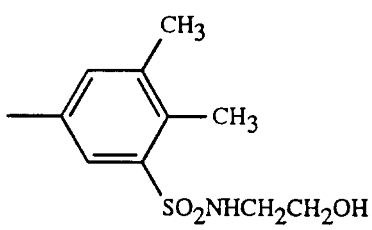

ist.

Die erfindungsgemässen Farbsalze kann man nach an sich bekannten Methoden herstellen, z.B. durch Umsetzung einer Aminoanthrachinonsulfonsäure der Formel

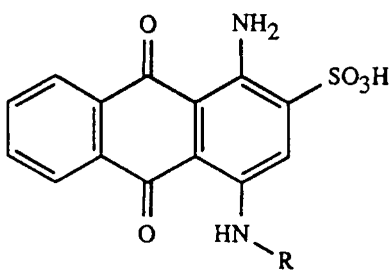

(II),

worin R die oben angegebene Bedeutung hat,
mit einem Amin der Formel

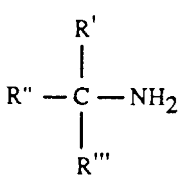

(III),

worin R', R'' und R''' die oben angegebene Bedeutung haben.

Als besonders geeignete Amine für die Herstellung der erfindungsgemässen Farbsalze sind die unter den Handelsnamen ®PRIMENE 81-R und ®PRIMENE JM-T der Fa. Rohm und Haas Co. erhältlichen Produkte. Diese stellen eine Mischung von Aminen dar, welche der Formel

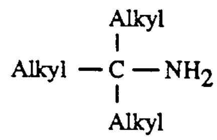

entsprechen, wobei PRIMENE 81-R insgesamt 12 bis 14 und PRIMENE JM-T insgesamt 18 bis 22 Kohlenstoffatome aufweisen.

Bei den Aminoanthrachinonsulfonsäuren der Formel II handelt es sich um bekannte Produkte. Sollten einige davon noch neu sein, so können sie in Analogie zu an sich bekannten Methoden hergestellt werden.

Die Salzbildung führt man nach den allgemein bekannten Methoden zweckmässig in der Weise durch, dass man eine Lösung oder Suspension eines Alkalisalzes der Farbstoffsulfonsäure mit der wässrigen Lösung eines wasserlöslichen Salzes des Amins, vorzugsweise eines solchen mit einer niederen Carbonsäure, insbesondere der Ameisensäure oder Essigsäure, umsetzt. Man arbeitet mit Vorteil bei Temperaturen zwischen 40-80 °C und einem pH-Wert unterhalb 7.

Da die Farbsalze im wässrigen Reaktionsmedium unlöslich sind, können sie durch Abfiltrieren isoliert werden.

Man kann die Umsetzung auch in organischen Lösungsmitteln allein oder in Gemischen mit Wasser durchführen. Eine bevorzugte Ausführungsform besteht darin, dass man zu einer wässrigen Lösung oder Suspension eines Alkalisalzes der Farbstoffsulfonsäure die Lösung des Amins in einem nur beschränkt wasserlöslichen organischen Lösungsmittel gibt, das Ganze mit einer anorganischen oder organischen Säure sauer stellt und intensiv durchmischt. Das Aminsalz der Farbstoffsulfonsäure geht dabei in die organische Phase und kann nach Schichtentrennung durch Verdampfen des Lösungsmittels isoliert werden. Die Umsetzung im Zweiphasensystem wird bei Temperaturen zwischen 10 °C und dem Siedepunkt des Lösungsmittel-Wasser-Gemischs vorgenommen. Als organische Lösungsmittel werden vorzugsweise chlorierte Kohlenwasserstoffe, wie Methylenchlorid, Chloroform oder Chlorbenzol, Ether, wie Diisopropyl- oder Dioctylether, Ketone, wie Methylisobutyl- oder Diisopropylketon, Ester, wie Ethylacetat, Butylacetat oder t-Butylpropionat oder aber Alkohole, wie n-Butanol, iso- oder t-Amylalkohol, verwendet.

Dank der erfolgreichen Kombination einiger bestimmter Parameter ist es aber gelungen ein neues Verfahren zu entwickeln, das es erlaubt überraschend vorteilhaft Produkte ausgezeichneter Qualität herzustellen.

Gegenstand der Erfindung ist demnach auch ein Verfahren zur Herstellung von Farbsalzen der Formel I

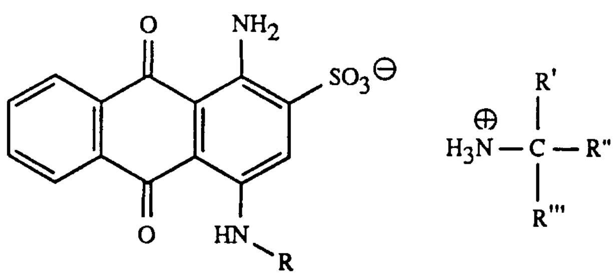

(I),

worin R, R', R'' und R''' die oben angegebene Bedeutung haben, dadurch gekennzeichnet, dass man das Alkalisalz einer Aminoanthrachinonsulfonsäure der Formel

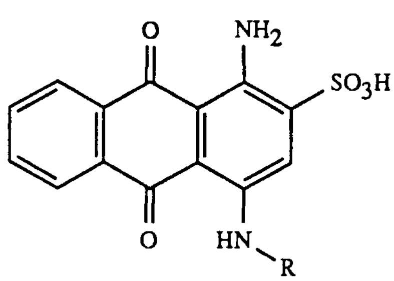

(II),

worin R die oben angegebene Bedeutung hat, mit der 1 bis 1,1-fachen molaren Menge eines Aminsalzes der Formel

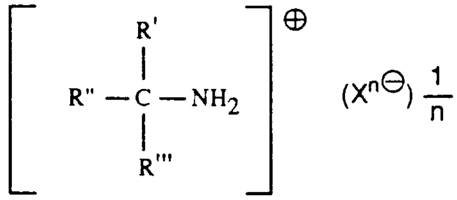

(IIIa),

worin R', R'' und R''' die oben angegebene Bedeutung haben, X das Anion einer Mineralsäure und n die Zahlen 1 bis 3 bedeuten,
in einem Niederalkylalkohol, vorzugsweise bei Raumtemperatur und bei einem pH von 3-5, umsetzt und das Reaktionsprodukt nach üblichen Methoden isoliert.

Unter Mineralsäure versteht man z.B. Schwefelsäure, Phosphorsäure oder insbesondere Salzsäure.

Niederalkylalkohol bedeutet z.B. Ethanol, Propanol, Isopropanol, n-Butanol, n-Pentanol und insbesondere Methanol.

Gegenüber den bisher üblichen Verfahren erreicht man mit dem erfindungsgemässen Verfahren einige bedeutende Vorteile:

Gegenüber rein wässerigen Herstellungsverfahren, wie z.B. im US-Patent 3,994,872 beschrieben,

- kürzere Reaktionszeit und vollständigere Umsetzung;
- weniger Probleme bei der Isolierung;
- gleichmässigere Qualität.

Gegenüber 2-Phasenverfahren (Wasser/nur beschränkt wasserlösliches Lösungsmittel), wie z.B. aus dem US-Patent 4,359,418 bekannt,

- Trennung der Wasserphase fällt weg;
- weniger Trocknungsprobleme;
- weniger Geruchsprobleme;
- geringere Neigung zum Zusammenbacken während des Trocknungsprozesses.

Gegenüber reinen Lösungsmittelverfahren, wie z.B. im US-Patent 4,005,066 und im GB-Patent 944,409 beschrieben,

- Arbeiten bei Raumtemperatur;
- kein grosser Ueberschuss an Amin;
- weniger Geruchsprobleme.

Die neuen Farbsalze weisen eine ausgezeichnete Alkohollöslichkeit auf, insbesondere in niederen Alkanolen, wie Methanol, Ethanol, n-Propanol oder Isopropanol, in Alkylenglykolmonoalkylethern, z.B. Ethylenglykol-monomethyl- oder ethylether, in Alkylenglykolen, wie in Propylenglykolen, oder in araliphatischen Alkoholen, wie in Benzylalkohol, oder in Gemischen derartiger Alkohole, ferner in niederen aliphatischen Ketonen, z.B. Aceton, Methylethylketon, Methylisobutylketon oder auch in Cyclohexanon, ferner in Carbonsäureestern, z.B. Methylacetat, Ethylacetat, Butylacetat oder Glykolmonoacetat, sowie in halogenierten Kohlenwasserstoffen, vorzugsweise niederen aliphatischen Kohlenwasserstoffen, wie Chloroform, Methylenchlorid, Ethylenchlorid oder Kohlenstofftetrachlorid, aber auch in Mischungen solcher Lösungsmittel untereinander und in Mischungen solcher Lösungsmittel mit Wasser.

Die Lösungen der erfindungsgemässen Farbsalze zeichnen sich durch eine gute Lagerbeständigkeit aus, d.h. sie zeigen bei längerem Lagern nur eine geringe Neigung zur Flokkulation oder Sedimentation.

Wegen ihrer guten Löslichkeit in den oben genannten Ketonen, besonders Aceton, eignen sich die erfindungsgemäss erhältlichen Farbsalze zum Färben von Cellulose-2 1/2-acetat in der Spinnmasse; dank ihrer guten Löslichkeit in halogenierten, niederen aliphatischen Kohlenwasserstoffen, besonders Chloroform und Methylenchlorid/Methanol 9:1, können sie auch für die Spinnfärbung von Cellulosetriacetat verwendet werden. Das spinngefärbte Fasermaterial zeichnet sich durch Reinheit und Stärke des Farbtons, durch einwandfreie Verteilung des Farbkörpers und durch sehr gute Echtheiten, wie beispielsweise hohe Wasch-, Wasser-, Bleich-, Ueberfärbe-, Trockenwasch-, Reib-, Bügel-, Trockenhitze- und Lichtechtheit aus.

Infolge ihrer guten Löslichkeit in Alkoholen, Estern sowie deren Mischungen, sind die neuen Farbsalze besonders geeignet zum Färben von filmbildenden Polymeren.

Als alkoholische und/oder esterhaltige Lösungen filmbildender Polymerer sind hier insbesondere solche flüssige Lacke zu verstehen, die sich zur Verwendung in Druckfarben für den Flexodruck eignen. Sie eignen sich auch sehr gut für die Anwendung in Ink-Jet Drucktinten. Als Polymere enthalten diese Lösungen beispielsweise Naturharze, wie Schellack oder Manilakopal, oder Cellulosederivate, beispielsweise Celluloseether, wie Ethylcellulose oder Celluloseester, wie Nitrocellulose, ferner Maleinatharze oder Phenyl-Formaldehyd-harze, die vorzugsweise mit Kolophonium modifiziert sind, wie die in der US-PS 2 347 923 beschriebenen Produkte, Polyamidharze, d.h. Polykondensationsprodukte von Polyaminen mit Polycarboxyverbindungen, die z.B. in der US-PS 2 663 649 beschrieben sind, Formaldehyd-Harnstoff- und Formaldehyd-Melamin-Kondensate, Keton-Formaldehyd-Kondensate, Polyvinylacetate oder Polyacrylsäureharze, z.B. Polybutylacrylatharz oder deren Gemische, ferner Polykondensationsprodukte mehrwertiger Alkohole, wie Glycerin oder Pentaerythrit, mit mehrbasischen Säuren, wie Maleinsäure oder Phthalsäure allein oder in Kombination mit ungesättigten Fettsäuren wie jenen des Lein- und Ricinusöls.

Daneben können die Lösungen filmbildender Polymerer noch in der Lackindustrie übliche Hilfsstoffe, wie Netzmittel, z.B. höhere Fettsäure-bis-hydroxyalkylamide, wie Cocosölfettsäure-bis(-β-hydroxyethyl)-amid, Weichmacher, wie z.B. Phthalsäure, und weitere Zusätze, wie Siliconöle, enthalten.

Diese Lösungen filmbildender Polymerer mit einem Gehalt an erfindungsgemässen Farbsalzen eignen sich beispielsweise zum Bedrucken verschiedenartiger Stoffe, wie von Metall-, z.B. Aluminiumfolien, von Papier, Glas, Kunstharzfolien und -filmen und dergleichen. Die Lösungen filmbildender Polymerer eignen sich weiter zum Lackieren verschiedenster Oberflächen, z.B. von Metallteilen, Formteilen aus Kunststoffen oder Holzplatten. Sie sind lagerbeständig und ergeben auf den genannten Materialien gut haftende, egale, farbstarke, wasserfeste, überlackier-, hitze-, licht- und wetterbeständige Ueberzüge.

Die erfindungsgemässen Farbsalze eignen sich ebenfalls zur Herstellung von Drucktinten für Tintenstrahl-Drucker (ink-jet printers). Wegen ihrer guten Löslichkeit und dem geringen Gehalt an anorganischen Salzen ergeben sich Tinten mit ausgezeichneten allgemeinen Eigenschaften, wie z.B. hohe Stabilität bei der Lagerung und im Druckbetrieb. Das Druckbild zeichnet sich z.B. durch gute Bildschärfe und Wasserbeständigkeit aus.

Im Bedarfsfall kann die Drucktinte nach allgemein üblichen Methoden dem Tintenstrahldrucksystem angepasst werden, um optimale Werte für z.B. Viskosität, Oberflächenspannung und spezifische Leitfähigkeit zu erhalten.

Die folgenden Beispiele erläutern die Erfindung. Prozente bedeuten, sofern nichts anderes angegeben, Gewichtsprozente.

Beispiel 1: Ein feuchter Presskuchen enthaltend 28 g des Farbstoffes der Formel

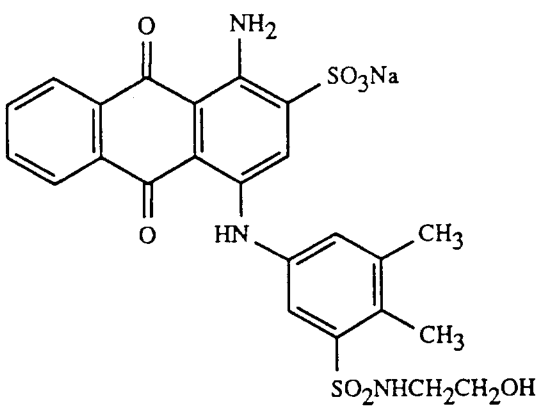

(IV)

wird in 300 ml Methylisobutylketon suspendiert. Innerhalb einer halben Stunde wird eine Lösung von 12,5 ml ®PRIMENE 81-R (Fa. Rohm und Haas) und 3 ml Ameisensäure in 300 ml Wasser zugegeben. Anschliessend wird das Reaktionsgemisch 5 Stunden bei Raumtemperatur gerührt, bevor die Phasen getrennt werden. Die organische Phase wird 3 Mal mit 250 ml Wasser extrahiert und abschliessend unter vermindertem Druck zur Trockne abgedampft. Ausbeute: 32 g des gewünschten blauen Farbsalzes.

| | C | H | N |
|---|---|---|---|
| Analyse: Ber.: | 59,5 % | 6,8 % | 7,6 % |
| Gef.: | 58,7 % | 7,1 % | 7,0 % |

Beispiel 2: Ersetzt man den in Beispiel 1 eingesetzten Farbstoff (IV) mit 35 g eines Farbstoffes der Formel

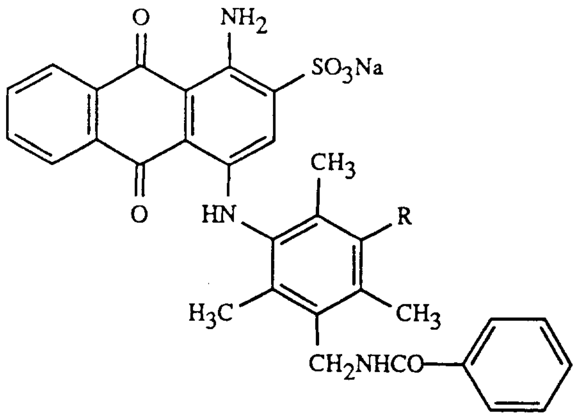

(V),

wobei R = 1/3 H und

2/3 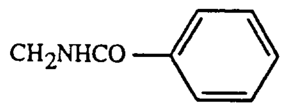

ist,

verfährt man sonst aber genau wie in Beispiel 1 beschrieben, so erhält man 39 g eines blauen Farbsalzes, das qualitativ die gleichen Eigenschaften, wie dasjenige von Beispiel 1 aufweist.

| | C | H | N |
|---|---|---|---|
| Analyse: Ber.: | 68,8 % | 7,1 % | 7,8 % |
| Gef.: | 68,2 % | 7,3 % | 7,4 % |

Beispiel 3: 45,8 g eines trockenen Farbstoffes der Formel

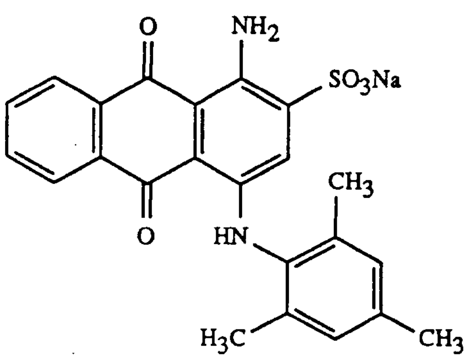

(VI)

werden in 900 ml Wasser suspendiert und auf 70 °C erwärmt. Danach werden 350 ml Methylisobutylketon und 27,4 ml ®PRIMENE 81-R zugegeben. Nach 30 Minuten werden ca 11 ml HCl 32 % zugetropft bis der pH der wässrigen Phase auf 4±0,5 gesunken ist. Nach weiteren 30 Minuten werden die Phasen getrennt. Die organische Phase wird mit 100 ml Wasser nochmals während 30 Minuten bei 70 °C extrahiert Nach erneuter Phasentrennung wird die organische Phase unter vermindertem Druck zur Trockne eingedampft und das blaue Produkt im Vacuumtrockenschrank bei 120 °C nachgetrocknet. Dies ergibt 56 g eines blauen Farbsalzes.

| | C | H | N |
|---|---|---|---|
| Analyse: Ber.:<br>Gef.: | 67,8 %<br>67,4 % | 7,7 %<br>7,6 % | 6,7 %<br>6,6 % |

Beispiel 4: 35 g des Farbstoffes der Formel V (wie in Beispiel 2) werden in 800 ml Wasser suspendiert, auf 90 °C erhitzt, 2 Stunden gerührt und anschliessend auf 50 °C abgekühlt. Danach wird tropfenweise eine Lösung von 12,5 ml ®PRIMENE 81-R und 3 ml Ameisensäure in 150 ml Wasser zugegeben. Dann wird 2 Stunden gerührt und bei 50 °C abfiltriert. Der Rückstand wird mit kaltem Wasser gewaschen und getrocknet. Man erhält 43 g eines blauen Farbsalzes, das qualitativ die gleichen Eigenschaften, wie diejenigen von Beispiel 2 aufweist.

| | C | H | N |
|---|---|---|---|
| Analyse: Ber.:<br>Gef.: | 68,8 %<br>67,0 % | 7,1 %<br>6,8 % | 7,8 %<br>7,6 % |

Beispiel 5: 30 g des Farbstoffs der Formel V, worin R = 4/5 H und 1/5

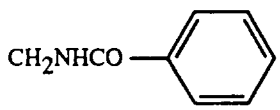

ist, werden in 250 ml Wasser aufgeschlämmt und auf 70 °C erhitzt. Nach einer halben Stunde wird eine Lösung von 14 ml ®PRIMENE 81-R in 200 ml Methylisobutylketon zugegeben. Nach einer weiteren halben Stunde werden ca. 6 ml konzentrierte Salzsäure zugetropft, bis der pH der wässrigen Phase 4-4,5 beträgt. Nach einer Stunde Rühren wird auf Raumtemperatur abgekühlt, die Phasen werden getrennt, die organische Phase wird einmal mit 200 ml Wasser bei 70 °C (ca. 30 Minuten) gewaschen, vom Wasser getrennt und unter vermindertem Druck zur Trockne eingedampft. Man erhält 42 g eines blauen Farbsalzes.

| | C | H | N |
|---|---|---|---|
| Analyse: Ber.:<br>Gef.: | 68,6 %<br>68,5 % | 7,2 %<br>7,5 % | 7,4 %<br>7,0 % |

Beispiele 6-11: Weitere Farbsalze erhält man, wenn man in Analogie zu Beispiel 3 Farbstoffe der Formel

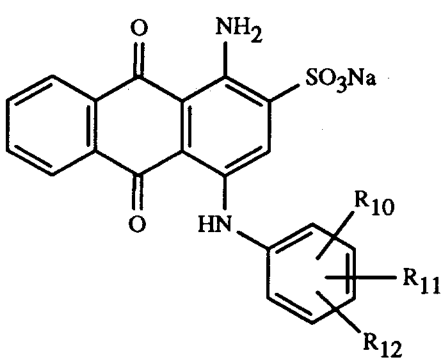

einsetzt,
worin $R_{10}$, $R_{11}$ und $R_{12}$ die in der nachfolgenden Tabelle angegebene Bedeutung haben:

| Beispiele | $R_{10}$ | $R_{11}$ | $R_{12}$ | Produktanalyse % | | |
|---|---|---|---|---|---|---|
| | | | | C | N | S |
| 6 | 3-$NHCOCH_3$ | 4-$CH_3$ | H | 64,4 | 8,2 | 4,8 |
| 7 | 3-$SO_2NHCH_2CH_2OH$ | 4-$CH_3$ | H | 58,7 | 7,5 | 8,7 |
| 8 | 3-$SO_2NHCH_2CH_3$ | 4-$CH_3$ | 5-$CH_3$ | 60,3 | 7,4 | 8,8 |
| 9 | 3-$SO_2N(CH_2CH_3)_2$ | 4-$CH_3$ | 5-$CH_3$ | 61,0 | 7,2 | 8,6 |
| 10 | 3-$SO_2N(CH_3)_2$ | 4-$CH_3$ | 5-$CH_3$ | 60,4 | 7,5 | 8,9 |
| 11 | 3-$SO_2N(CH_3)CH_2CH_2OH$ | 4-$CH_3$ | 5-$CH_3$ | 59,2 | 7,4 | 8,4 |

Beispiel 12: Ersetzt man in Beispiel 3 die 27,4ml ®PRIMENE 81-R mit 44,9 ml ®PRIMENE JM-T, so erhält man ein Produkt mit ebensoguten Eigenschaften.

Beispiel 13: In einem 1 Liter Planschliffkolben werden 600 ml Methanol vorgelegt und nacheinander 256 g (0,558 Mol) des Farbstoffes der Formel VI (wie in Beispiel 3) und 117 g (0,614 Mol) ®PRIMENE 81-R eingetragen. Anschliessend stellt man mit ca. 72 g (0,62 Mol) Salzsäure (32 %) auf pH 5,0 ein und lässt ca. 15 Minuten rühren. Die so hergestellte klare Lösung wird innert ca. 30 Minuten unter gutem Rühren auf 2000 ml kaltes Wasser ausgetragen. Das Produkt fällt in gut filtrierbarer Form aus. Man filtriert, wäscht das Nutschgut und trocknet anschliessend bis zur Gewichtskonstanz. Ausbeute: 336g (97 % d.Th.).

Beispiel 14: 5 g des nach Beispiel 1 erhaltenen Farbsalzes werden in 95 g eines Nitrocelluloselackes, hergestellt aus 15 g alkohollöslicher niedrigviskoser Nitrocellulose mit ca. 18 % Dibutylphthalat, 10 g Ethylenglykolmonoethylether, 20 g Ethylacetat und 50 g 94%-igem Ethanol, eingetragen. Die Mischung wird bis zur gleichmässigen Verteilung des Farbkörpers gerührt. Anschliessend wird der Lack mit einem Filmziehgerät (handcoater der Fa. RK Chemical Co. Ltd., Royston, GB) in einer Nassfilmdicke von ca. 12 µm auf Opalinpapier oder auf eine Aluminium-Kaschierfolie aufgetragen. Nach dem Trocknen liegt eine haftfeste, gleichmässige, kräftige blaue Lackierung vor, die gegenüber Belichtung sowie Behandlung mit Wasser und Butter hohe Beständigkeiten aufweist.

Beispiel 15: Eine Zweischichtlackierung von Aluminiumblech wird in folgenden Schritten aufgebaut:

a) Bindemittel: 67,5 g eines nichtrocknenden Alkydharzes in Form einer 60%igen Lösung in Xylol (®Alkydal F 27 der Firma Bayer), 26,4 g eines teilweise veresterten Melamin-Formaldehyd-Vorkondensates als 55%ige Lösung in Butanol/Xylol 1:1 (®Maprenal TTX der Firma Cassella), 1,1 g Xylol, 4 g Ethylenglykolmonoethylether und 1 g der 1%igen Lösung eines Silikonöls in Xylol werden zu einer homogenen Masse vermischt.

b) 1. Schicht: 5 g eines handelsüblichen feinteiligen Aluminiumpulvers werden in 10 g Methylethylketon und 10 g Butylacetat angeschlämmt. In die Suspension werden 75 g des im Abschnitt a) beschriebenen Bindemittels eingearbeitet. Die so erhaltene Dispersion wird mit dem Lösungsmittelgemisch aus 60 % Xylol, 20 % Butanol und 20 % Ethylenglykolmonoethylether auf die Verarbeitungsviskosität eingestellt und auf ein Aluminiumblech appliziert Durch 30-minütiges Trocknen bei 80 °C werden die Lösungsmittel verdampft.

c) 2. Schicht: 1 g des nach Beispiel 1 hergestellten Farbsalzes wird in 99 g des in Abschnitt a) beschriebenen Bindemittels gelöst und die Lösung mit dem in Abschnitt b) angegebenen Lösungsmittelgemisch auf Spritzviskosität eingestellt. Mittels Spritzpistole wird die Lösung als 2. Schicht auf das vorbehandelte Aluminiumblech aufgetragen. Durch 30-minütiges Trocknen und Einbrennen bei 130 °C wird die Einfärbung fertiggestellt. Es resultiert eine farbstarke blaue Lackierung von guter Wetter- und Lichtechtheit.

Beispiel 16: Es werden 20 g des gemäss Beispiel 1 erhältlichen Farbsalzes, 30 g gebleichter wachsfreier Schellack, 5 g Dibutylphthalat und 45 g Ethanol vermischt.

Man erhält so eine Druckfarbe von guter Lagerbeständigkeit, welche als solche oder in Verdünnung mit Ethanol für den Flexodruck auf Papier- und Aluminiumfolien verwendbar ist. Mit dieser Druckfarbe erhält man auf den genannten Materialien brillante und farbstarke blaue Drucke von guter Haftfestigkeit.

Beispiel 17: In 90 g einer Lösung, bestehend aus 25 % eines spritlöslichen mit Estern modifizierten Polyamidharzes (z.B. hergestellt gemäss Beispiel 7 der US-PS 2 663 649), 2 % Wasser, 5 % Benzin der Fraktion 80-100 °C, 48 % Ethanol und 20 % Isopropanol werden 10 g des gemäss Beispiel 2 erhältlichen Farbsalzes eingerührt.

Man erhält eine Druckfarbe, welche im Flexodruck Zellglas mit blauem Farbton von guter Haftfestigkeit und hoher Reinheit färbt.

Beispiel 18: Auf 1000 g einer Lösung von Acetylcellulose in Aceton mit einem Festkörpergehalt von 26 % werden 1,3 g des Farbsalzes gemäss Beispiel 1 gestreut. Dann setzt man 20 ml Aceton zu und rollt die

Mischung in einer gut verschlossenen Flasche auf den Rollblock bis der Farbstoff vollkommen gelöst ist. Anschliessend wird die gefärbte Spinnlösung durch Düsen gepresst. Der gebildete Faden läuft durch ein längeres geheiztes Rohr und kann dann unmittelbar aufgespult werden. Das gefärbte Material zeigt einen reinen blauen Farbton und weist ausgezeichnete Echtheiten auf, insbesondere einwandfreie Wasch-, Wasser-, Bleich-, Ueberfärbe-, Trockenwasch-, Reib-, Bügel-, Trockenhitze- und Lichtechtheit.

Beispiel 19: 6 g des nach Beispiel 13 erhaltenen Farbsalzes und 1 g des Ketonharzes ®SPRITHARZ SK (Hüls) werden mit 80 g Methylethylketon, 8 g Isopropylacetat und 5 g Ethoxypropanol vermischt, unter intensivem Rühren gelöst und anschliessend durch ein Sieb von 0,2 µm filtriert. Die so erhaltene Druckfarbe eignet sich ausgezeichnet für den Einsatz in den üblichen Tintenstrahl-Druckverfahren.

## Patentansprüche

**1.** Farbsalze der Formel

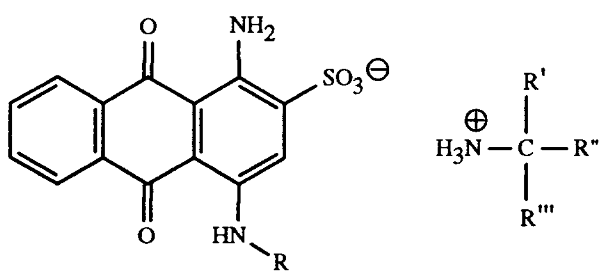 (I),

worin R eine Gruppe der Formeln

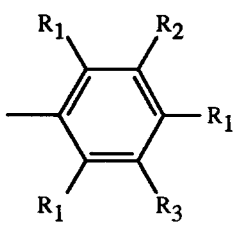 oder 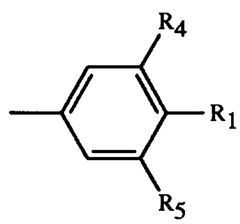 ,

bedeutet, worin $R_1$ $C_1$-$C_4$-Alkyl, $R_2$ und $R_3$ unabhängig voneinander Wasserstoff, $CH_2X$, $SO_2Y$ oder NHCOZ bedeuten, $R_4$ Wasserstoff oder $C_1$-$C_4$-Alkyl ist und $R_5$ $CH_2X$, $SO_2Y$ oder NHCOZ bedeutet, X eine Gruppe $NHCOR_6$ oder $NR_7SO_2R_6$, Y $NR_8R_9$ oder $N(R_8)_2$ und Z $C_1$-$C_4$-Alkyl oder $NHR_9$ bedeuten, $R_6$ $C_1$-$C_4$-Alkyl, unsubstituiertes oder durch $C_1$-$C_4$-Alkyl oder Halogen substituiertes Phenyl, $R_7$ Wasserstoff oder $C_1$-$C_4$-Alkyl und $R_8$ Wasserstoff, $C_1$-$C_4$-Alkyl oder eine Gruppe

$$-(CH_2)_2-OH$$

bedeutet, und $R_9$ Wasserstoff, $C_1$-$C_4$-Alkyl oder Phenyl ist, und R', R'' und R''' Alkylreste mit zusammen 10 bis 24 Kohlenstoffatomen bedeuten, sowie Gemische solcher Farbsalze.

**2.** Farbsalze gemäss Anspruch 1, worin $R_1$ Methyl oder Ethyl bedeutet.

**3.** Farbsalze gemäss Anspruch 1, worin $R_1$ Methyl, $R_2$ und $R_3$ unabhängig voneinander Wasserstoff oder $CH_2X$, $R_4$ Methyl und $R_5$ $SO_2Y$ bedeuten, X eine Gruppe $NHCOR_6$ und Y $NHR_8$ sind, wobei $R_6$, $R_7$ und $R_8$ die in Anspruch 1 angegebene Bedeutung haben.

4. Farbsalze gemäss Anspruch 1 der Formel I, worin R eine Gruppe der Formel

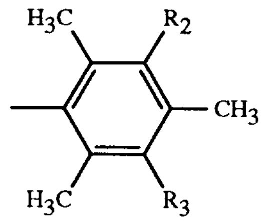

ist worin $R_2$ und $R_3$ unabhängig voneinander Wasserstoff oder eine Gruppe $CH_2$-$NHCOC_6H_5$ bedeuten.

5. Farbsalze gemäss Anspruch 1 der Formel I, worin R eine Gruppe der Formel

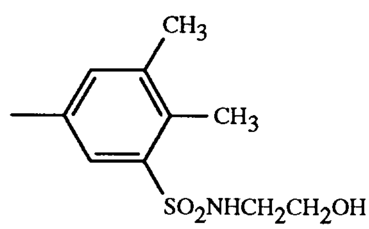

ist.

6. Verfahren zur Herstellung von Farbsalzen gemäss Anspruch 1 der Formel I

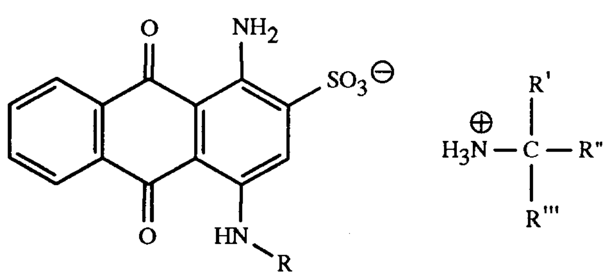

(I),

worin R, R', R'' und R''' die in Anspruch 1 angegebene Bedeutung haben, dadurch gekennzeichnet, dass man das Alkalisalz einer Aminoanthroachinonsulfonsäure der Formel

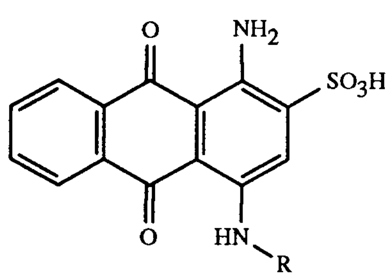

(II),

worin R die in Anspruch 1 angegebene Bedeutung hat, mit der 1 bis 1,1-fachen molaren Menge eines Aminsalzes der Formel

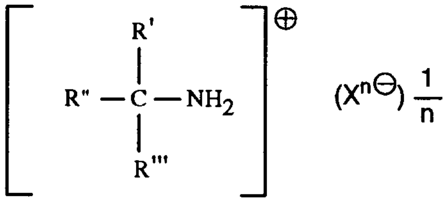

(IIIa),

worin R', R'' und R''' die in Anspruch 1 angegebene Bedeutung haben, X das Anion einer Mineralsäure und n die Zahlen 1 bis 3 bedeuten, in einem Niederalkylalkohol umsetzt und das Reaktionsprodukt nach üblichen Methoden isoliert.

7. Verfahren gemäss Anspruch 6, dadurch gekennzeichnet, dass die Umsetzung bei Raumtemperatur und bei einem pH von 3 bis 5 durchgeführt wird.

8. Verfahren gemäss Anspruch 6, dadurch gekennzeichnet, dass der Niederalkylalkohol Methanol ist.

9. Verwendung der Farbsalze gemäss Anspruch 1 zum Färben organischer Lösungen von Polymeren.

10. Polymere enthaltend Farbsalze gemäss Anspruch 1.

## Claims

1. A dye salt of formula

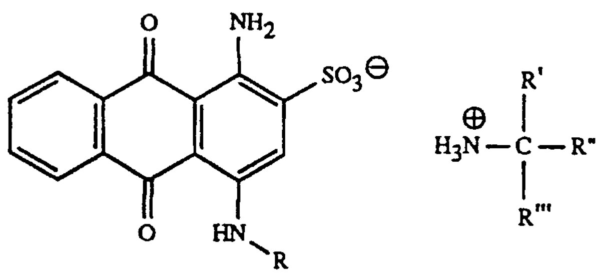

(I),

in which R is a group of formula

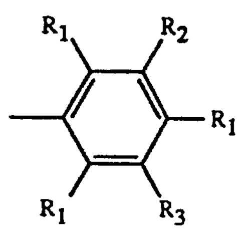

or

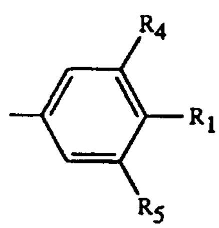

,

in which $R_1$ is $C_1$-$C_4$alkyl, $R_2$ and $R_3$ are each independently of the other hydrogen, $CH_2X$, $SO_2Y$ or NHCOZ, $R_4$ is hydrogen or $C_1$-$C_4$alkyl and $R_5$ is $CH_2X$, $SO_2Y$ or NHCOZ, X is an $NHCOR_6$ or $NR_7SO_2R_6$ group, Y is $NR_8R_9$ or $N(R_8)_2$, and Z is $C_1$-$C_4$alkyl or $NHR_9$, $R_6$ is $C_1$-$C_4$alkyl, unsubstituted phenyl or phenyl which is substituted by $C_1$-$C_4$alkyl or halogen, $R_7$ is hydrogen or $C_1$-$C_4$alkyl and $R_8$ is hydrogen, $C_1$-$C_4$alkyl or a $-(CH_2)_2$-OH group, and $R_9$ is hydrogen, $C_1$- $C_4$alkyl or phenyl, and R', R'' and R''' are alkyl radicals containing together 10 to 24 carbon atoms, or a mixture of such dye salts.

2. A dye salt according to claim 1, in which $R_1$ is methyl or ethyl.

3. A dye salt according to claim 1, in which $R_1$ is methyl, $R_2$ and $R_3$ are each independently of the other hydrogen or $CH_2X$, $R_4$ is methyl and $R_5$ is $SO_2Y$, X is an $NHCOR_6$ group and Y is $NHR_8$, and $R_6$, $R_7$ and $R_8$ are as defined in claim 1.

4. A dye salt according to claim 1 of formula I, in which R is a group of formula

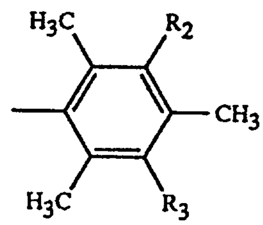

in which $R_2$ and $R_3$ are each independently of the other hydrogen or a $CH_2$-$NHCOC_6H_5$ group.

5. A dye salt according to claim 1 of formula I, in which R is a group of formula

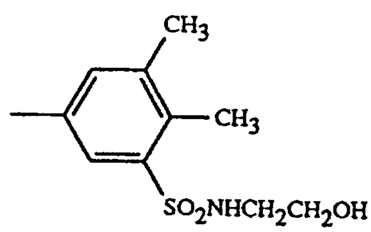

6. A process for the preparation of a dye salt according to claim 1 of formula I

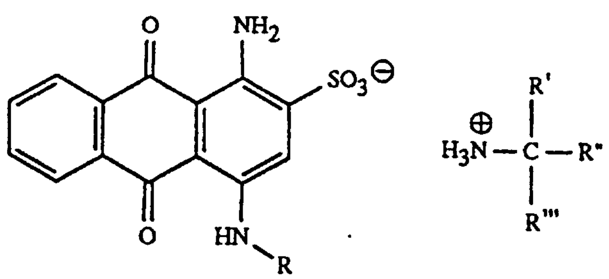

(I),

in which R, R', R'' and R''' are as defined in claim 1, which comprises reacting the alkali metal salt of an aminoanthraquinonesulfonic acid of formula

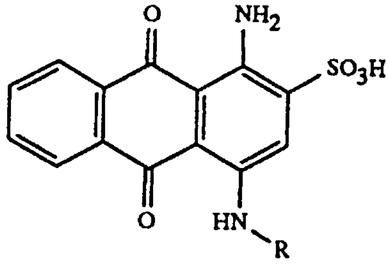

(II),

in which R is as defined in claim 1, with the 1 to 1.1-fold molar amount of an amine salt of formula

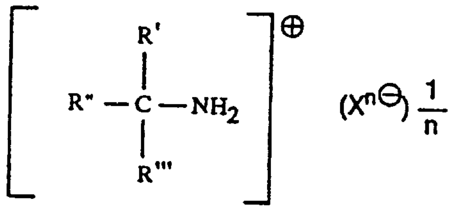

(IIIa),

in which R, R'' and R''' are as defined in claim 1, X is the anion of a mineral acid, and n is 1 to 3, in a lower alkyl alcohol, and isolating the reaction product by conventional methods.

**7.** A process according to claim 6, wherein the reaction is carried out at room temperature and in the pH range from 3 to 5.

**8.** A process according to claim 6, wherein the lower alkyl alcohol is methanol.

**9.** Use of a dye salt according to claim 1 for colouring organic solutions of polymers.

**10.** A polymer containing a dye salt according to claim 1.

## Revendications

**1.** Sels colorants de formule :

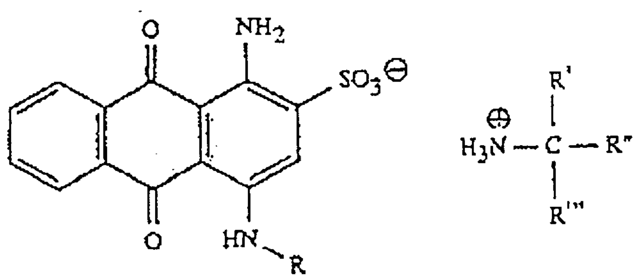

(I),

dans laquelle R représente un groupe de formule :

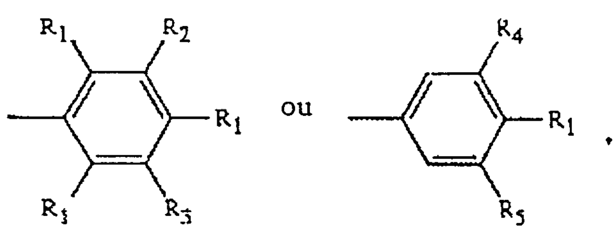

[formules dans lesquelles $R_1$ représente un groupe alkyle en $C_1$ à $C_4$; $R_2$ et $R_3$ représentent chacun, indépendamment l'un de l'autre, un atome d'hydrogène, un groupe $CH_2X$, $SO_2Y$ ou NHCOZ; $R_4$ représente un atome d'hydrogène ou un groupe alkyle en $C_1$ à $C_4$; et $R_5$ représente $CH_2X$, $SO_2y$ ou NHCOZ; X représente un groupe $NHCOR_6$ ou $NR_7SO_2R_6$; Y représente un groupe $NR_8R_9$ ou $N(R_8)_2$ et C représente un groupe alkyle en $C_1$ à $C_4$ ou $NHR_9$, $R_6$ représente un groupe alkyle en $C_1$ à $C_4$, un groupe phényle non substitué ou substitué par un reste alklyle en $C_1$ à $C_4$ ou par de l'halogène, $R_7$

représente un atome d'hydrogène ou un groupe alkyle en $C_1$ à $C_4$ et $R_8$ représente un atome hydrogène, un groupe alkyle en $C_1$ à $C_4$ ou un groupe $-(CH_2)-OH$ , et $R_9$ représente un atome d'hyrogène, un groupe alkyle en $C_1$ à $C_4$ ou un groupe phényle; et R', R'' et R''' représente des restes alkyles comportant au total 10 à 24 atomes de carbone), ainsi que des mélanges de tels sels colorants.

**2.** Sels colorants selon la revendication 1, dans lesquels $R_1$ représente un groupe méthyle ou éthyle.

**3.** Sels colorants selon la revendication 1, dans lesquels $R_1$ représente un groupe méthyle; $R_2$ et $R_3$ représentent chacun, indépendamment l'un de l'autre, un atome d'hydrogène ou un groupe $CH_2X$; $R_4$ et $R_5$ un groupe $SO_2Y$; X représente un groupe $NHCOR_6$ et Y représente un groupe $NHR_8$, les symboles $R_6$, $R_7$ et $R_8$ ayant le sens indiqué à la revendication 1.

**4.** Sels colorants selon la revendication 1, de formule I dans laquelle R représente un groupe de formule

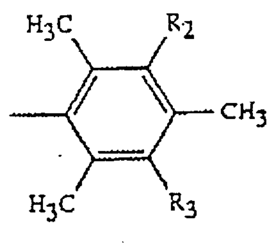

dans laquelle $R_2$ et $R_3$ représentent chacun, indépendamment l'un de l'autre, un atome d'hydrogène ou un groupe $CH_2-NHCOC_6H_5$.

**5.** Sels colorants selon la revendication 1, de formule I dans laquelle R représente un groupe de formule :

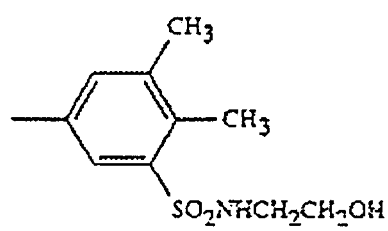

**6.** Procédé de préparation de sels colorants selon la revendication 1, de formule I :

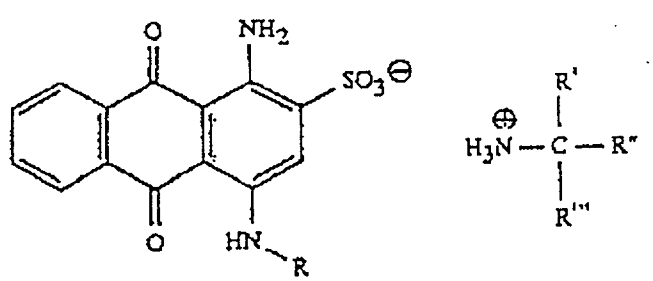

(I),

(dans laquelle R, R', R'' et R''' ont le sens indiqué à la revendication 1), procédé caractérisé en ce qu'on fait réagir le sel alcalin d'un acide amino anthraquinone sulfonique de formule

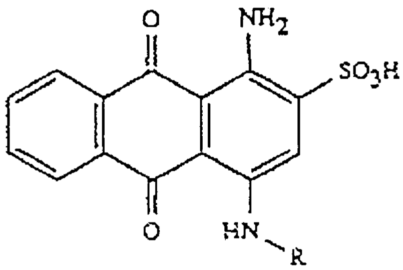

(II),

(dans laquelle R a le sens indiqué à la revendication 1), avec la quantité 1 à 1,1 fois molaire d'un sel d'amine de formule:

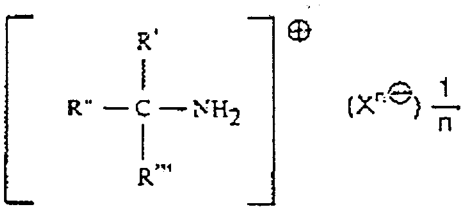

(IIIa),

(dans laquelle R', R'' et R''' ont le sens indiqué à la revendication 1; X représente l'anion d'un acide minéral et n est un nombre valant 1 à 3) dans un alcool alkylique inférieur et l'on isole selon des méthodes usuelles le produit de la réaction.

**7.** Procédé selon la revendication 6, caractérisé en ce qu'on effectue la réaction à la température ambiante et à un pH de 3 à 5.

**8.** Procédé selon la revendication 6, caractérisé en ce que l'alcool alkylique inférieur est le méthanol.

**9.** Utilisation des sels colorants selon la revendication 1 pour colorer des solutions organiques de polymères.

**10.** Polymères contenant des sels colorants selon la revendication 1.